# EUROPEAN PATENT APPLICATION

(11) **EP 3 246 360 A1**
(43) Date of publication of application: **22.11.2017**
(21) Application number: 16737445.3
(22) Date of filing: 14.01.2016
(51) Int. Cl.: C08L 25/14, C08K 5/00, C08L 33/10

(54) **TRANSPARENT, HIGHLY HEAT RESISTANT RESIN COMPOSITION**

(30) Priority: 15.01.2015 JP 2015005693
(71) Applicant: Denka Company Limited, Tokyo 103-8338 (JP)
(72) Inventor: NISHINO, Kohhei, Ichihara-city Chiba 290-8588 (JP); SHINDO, Yuichi, Ichihara-city Chiba 290-8588 (JP); SHIMOKOBA, Yuichi, Ichihara-city Chiba 290-8588 (JP); NOGUCHI, Tetsuo, Ichihara-city Chiba 290-8588 (JP); MATSUMOTO, Masanori, Ichihara-city Chiba 290-8588 (JP); KUROKAWA, Yoshinari, Ichihara-city Chiba 290-8588 (JP)
(74) Representative: Gulde & Partner
(86) International application number: PCT/JP2016/051055
(87) International publication number: WO 2016/114374

(57) **Abstract**

A resin composition that is transparent and excellent in weather resistance and heat resistance, and a molded article thereof are provided. According to the present invention, a transparent and highly heat-resistant resin composition, comprising: an aromatic vinyl-(meth) acrylic acid ester-unsaturated dicarboxylic acid anhydride copolymer (A); and an ultraviolet absorbing agent (B); wherein an amount of a residual unsaturated dicarboxylic acid anhydride monomer contained in the copolymer (A) is 100 ppm or less, and a content of the ultraviolet absorbing agent (B) with respect to a total amount of (A) and (B) is 0.03 to 1.0 mass%, is provided. The composition may further comprise a methacrylic resin (C) in addition to (A) and (B).

## Description

### Technical Field

The present invention relates to a transparent and highly heat-resistant resin composition that is excellent in weather resistance.

### Background Art

Transparent resins such as a methacrylic resin and a polystyrene are used for various applications such as parts of household electric appliances, automobile parts, food packaging containers, building materials, miscellaneous goods and the like. In addition, it is also used as an optical member for liquid crystal displays such as optical films, diffusing plates, light guide plates and the like, taking advantage of excellent transparency. Although the methacrylic resin and the polystyrene have good optical properties such as transparency, they have problems such as low heat resistance, and they have been used only for limited uses. As a technology for enhancing the heat resistance, there are the following.

### Citation List

### Patent Literature

PLT1:JPS57-153008
PLT2:WO2009/031544
PLT3:WO2014/021264

### Summary of Invention

### Technical Problem

An object of the present invention is to provide a resin composition that is transparent and excellent in weather resistance and heat resistance and a molded article thereof.

### Solution to Problem

That is, the present invention is as follows.
(1) A transparent and highly heat-resistant resin composition, comprising:
   an aromatic vinyl-(meth) acrylic acid ester-unsaturated dicarboxylic acid anhydride copolymer (A); and
   an ultraviolet absorbing agent (B);
   wherein an amount of a residual unsaturated dicarboxylic acid anhydride monomer contained in the copolymer (A) is 100 ppm or less, and
   a content of the ultraviolet absorbing agent (B) with respect to a total amount of (A) and (B) is 0.03 to 1.0 mass%.
(2) The composition of (1), further comprising a methacrylic resin (C).
(3) The composition of (2), wherein a content of the methacrylic resin (C) with respect to a total amount of (A), (B) and (C) is 30 to 85 mass%.
(4) The composition any one of (1) to (3), wherein the copolymer (A) comprises:
   45 to 85 mass% of a monomer unit of the aromatic vinyl;
   5 to 45 mass% of a monomer unit of the (meth) acrylic acid ester;
   10 to 30 mass% of a monomer unit of the unsaturated dicarboxylic anhydride;
   wherein a weight average molecular weight (Mw) of the copolymer (A) is 10 x 10⁴ to 30 x 10⁴.
(5) The composition any one of (1) to (4), wherein Vicat softening temperature in the condition of a load of 50 N is 115 to 150 °C.
(6) A molded article comprising the composition of any one of (1) to (5).

### Advantageous Effects of Invention

The resin composition of the present invention and the molded article thereof are useful for parts of household electric appliances, automobile parts, building materials, optical members and the like of requiring heat resistance and weather resistance.

### Description of Embodiments

### <Explanation of Terms>

In the present specification, for example, the expression "A to B" means A or more and B or less.

Hereinafter, embodiments of the present invention will be described in detail.

An aromatic vinyl-(meth) acrylic acid ester-unsaturated dicarboxylic acid anhydride copolymer (A) used in the present invention is a copolymer having unit structures derived from an aromatic vinyl monomer, an acid anhydride monomer and a (meth) acrylic acid ester monomer, and obtained by copolymerizing these monomers.

The aromatic vinyl monomer is styrene, o-methylstyrene, m-methylstyrene, p-methylstyrene, 2,4- dimethylstyrene, ethylstyrene, p-tert-butylstyrene, α-methylstyrene, α-methyl-p-methylstyrene and the like. Among these, preferably, the aromatic vinyl monomer is styrene. The aromatic vinyl monomer may comprise one type of these monomers or may comprise two or more types of these monomers.

The (meth) acrylic acid ester monomer is a methacrylic acid ester monomer such as methyl methacrylate, ethyl methacrylate, n-butyl methacrylate, 2-ethylhexyl methacrylate, dicyclopentanyl methacrylate, isobornyl methacrylate; and acrylate ester monomer such as methyl acrylate, ethyl acrylate, n-butyl acrylate, 2-methylhexyl acrylate, 2-ethylhexyl acrylate, decyl acrylate. Among these, preferably, the (meth) acrylic acid ester monomer is methyl methacrylate. The (meth) acrylic acid ester monomer may comprise one type of these monomers or may comprise two or more types of these monomers.

The unsaturated dicarboxylic acid anhydride monomer is maleic anhydride, itaconic anhydride, citraconic anhydride, aconitic anhydride and the like. Among these, preferably, the unsaturated dicarboxylic acid anhydride monomer is maleic anhydride. The unsaturated dicarboxylic acid anhydride monomer may comprise one type of these monomers or may comprise two or more of these monomers.

The aromatic vinyl-(meth) acrylic acid ester-unsaturated dicarboxylic acid anhydride copolymer (A) comprises: preferably, 45 to 85 mass% of the aromatic vinyl monomer unit; 5 to 45 mass% of the (meth) acrylic acid ester monomer unit; 10 to 30 mass% of the unsaturated dicarboxylic anhydride monomer unit; more preferably, 50 to 73 mass% of the aromatic vinyl monomer unit; 15 to 35 mass% of the (meth) acrylic acid ester monomer unit; 12 to 25 mass% of the unsaturated dicarboxylic anhydride monomer unit. Preferable content of the unsaturated dicarboxylic anhydride monomer unit is 10 to 30 mass%, since heat resistance is excellent. Preferable content of the aromatic vinyl monomer unit is 45 to 85 mass% and preferable content of the (meth) acrylic acid ester monomer unit is 5 to 45 mass%, because of excellent balance among moldability, water absorbing property and strength. In addition, preferable content of the unsaturated dicarboxylic acid anhydride monomer unit is 10 to 30 mass% and preferable content of the aromatic vinyl monomer unit is 45 to 85 mass%, since a compatibility of the copolymer (A) with the methacrylic resin is excellent.

A copolymer having unit structures derived from a vinyl monomer copolymerizable with the aromatic vinyl monomer, the acid anhydride monomer and the (meth) acrylic acid ester monomer in addition to the aromatic vinyl monomer, the acid anhydride monomer and the (meth) acrylic acid ester monomer is also used as the aromatic vinyl-(meth) acrylic acid ester-unsaturated dicarboxylic acid anhydride copolymer (A). Examples of the copolymerizable vinyl monomer includes vinyl cyanide monomer such as acrylonitrile and methacrylonitrile; vinyl carboxylic acid monomer such as acrylic acid and methacrylic acid; N-alkyl maleimide monomer such as N-methyl maleimide, N-ethyl maleimide, N-butyl maleimide and N-cyclohexyl maleimide; and N-aryl maleimide monomer such as N-phenyl maleimide, N-methyl phenyl maleimide and N-chlorophenyl maleimide. The copolymerizable vinyl monomer may comprise two or more types of these monomers.

An amount of a residual unsaturated dicarboxylic acid anhydride monomer contained in the aromatic vinyl-(meth) acrylic acid ester-unsaturated dicarboxylic acid anhydride copolymer (A) is 100 ppm or less, preferably less than 70 ppm. When the amount of the saturated dicarboxylic anhydride monomer is 100 ppm or less, a copolymer excellent in hue with less yellow tint is obtained and also excellent in weather resistance. Since the unsaturated dicarboxylic acid anhydride has a high boiling point, it is difficult to remove the unsaturated dicarboxylic acid anhydride by devolatilization treatment. Therefore, if unreacted unsaturated dicarboxylic acid anhydride monomer remains at the completion of polymerization, the unsaturated dicarboxylic acid anhydride monomer is contained in the copolymer as a residual unsaturated dicarboxylic acid anhydride. The amount of the residual unsaturated dicarboxylic acid anhydride monomer is a value measured by liquid chromatography. First, 200-250 mg of the copolymer is precisely weighed and dissolved in 5 mL of dichloroethane. 5 mL of hexane is added to the resulting solution and filter it with a syringe filter. 3 mL of the filtered solution and 3 mL of pure water are placed into about 10 mL of test tube, then, the test tube is capped and shaken for 2 hours with a shaker. By adding pure water, the unsaturated dicarboxylic anhydride monomer is hydrolyzed to be converted to an unsaturated dicarboxylic acid monomer, and transferred to the aqueous layer. After shaking, let it stand for 30 minutes, suck the lower layer (aqueous layer) of the solution divided into two layers with a syringe, and the sucked solution is a measurement sample. If it is difficult to separate into two layers, extend the shaking time and standing time. The amount of the residual unsaturated dicarboxylic acid anhydride monomer is a value evaluated by measuring the amount of unsaturated dicarboxylic acid under the following conditions.
Device name: LC-10 CLASS-VP (available from Shimadzu Corporation)
Column: YMC-Pack ODS-A 150 mm × 6.0 mm I. D S-5 µm, 12 nm
Detector: SPDM 10 Avp
Detection wavelength: 230 nm
Mobile phase: methanol/water = 50/50 phosphate buffer solution pH = 3.2
Flow rate: 1.0 mL/min
Injection volume: 20 µL

The weight average molecular weight (Mw) of the aromatic vinyl-(meth) acrylic acid ester-unsaturated dicarboxylic acid anhydride copolymer (A) is preferably 7 x 10⁴ to 30 x 10⁴, more preferably 10 x 10⁴ to 20 x 10⁴. The weight average molecular weight (Mw) in the range of 7 x 10⁴ to 30 x 10⁴ is preferable because of excellent balance between moldability and strength. The weight average molecular weight (Mw) of the copolymer may be controlled by a polymerization temperature in a polymerization step, a kind and amount of a polymerization initiator, a kind and amount of a chain transfer agent, a kind and amount of a solvent used during polymerization. The weight average molecular weight (Mw) is a polystyrene equivalent value measured by gel permeation chromatography (GPC) under conditions described below.
Device name: SYSTEM-21 Shodex (available from Showa Denko K.K.)
Column: Three PL gel MIXED-B series
Temperature: 40 °C
Detection: Differential refractive index
Solvent: Tetrahydrofuran
Concentration: 2 mass%
Calibration curve: it was prepared using standard polystyrene (PS) (available from PL).

The manufacturing method of the aromatic vinyl-(meth) acrylic acid ester-unsaturated dicarboxylic acid anhydride copolymer (A) will be described. There is no particular limitation regarding the polymerization method. Here, the copolymer can be manufactured by known methods such as solution polymerization, bulk polymerization, and the like, and the solution polymerization is preferable. The solvent used in the solution polymerization is preferably nonpolymerizable solution, since it hardly produces by-products, and the adverse effect is less. There is no particular limitation with respect to the type of the solvent. For example, ketones such as acetone, methyl ethyl ketone, methyl isobutyl ketone, and acetophenone; ethers such as tetrahydrofuran and 1,4-dioxane; aromatic hydrocarbons such as toluene, ethyl benzene, xylene, and chlorobenzene, can be mentioned. Here, from the viewpoint of the solubility of the monomers and the copolymer, and the ease to collect the solvent, methyl ethyl ketone and methyl isobutyl ketone are preferable. The addition amount of the solvent is preferably 10 to 100 parts by mass, more preferably 30 to 80 parts by mass, with respect to 100 parts by mass of the copolymer to be obtained. When the addition amount is 10 parts by mass or more, it is preferable in view of controlling the reaction speed and the viscosity of the polymer solution. When the addition amount is 100 parts by mass or less, it is preferable in view of obtaining the desired weight average molecular weight (Mw).

The polymerizing process can be any one of the batch type polymerization method, semi-batch type polymerization method, and continuous polymerization method. Here, the batch type polymerization method is preferable in view of obtaining the desired molecular weight range and transparency. In the case of the continuous polymerization method, it is preferable to use two or more reactors connected in series, and it is preferable to use a plug flow type reactor as a final reactor after a complete mixing tank type reactor to reduce the amount of the residual unsaturated dicarboxylic acid anhydride monomer.

There is no particular limitation regarding the type of polymerization. Here, a radical polymerization method is preferable in view of manufacturing by a simple process with high productivity. There is no particular limitation regarding the polymerization initiator. For example, known organic peroxides such as benzoyl peroxide, t-butyl peroxybenzoate, 1,1-bis(t-butyl peroxy)-2-methylcyclohexane, t-butyl peroxy isopropyl monocarbonate, t-butyl peroxy-2-ethylhexanoate, t-butyl peroxyacetate, dicumyl peroxide, and ethyl-3,3-di-(t-butyl peroxy) butylate; and known azo compounds such as azobisisobutyronitrile, azobiscyclohexanecarbonitrile, azobismethylpropionitrile, and azobismethylbutyronitrile; can be used. These polymerization initiators can be used by two or more types in combination. Among these, organic peroxides having the 10 hour half life temperature in the range of 70 to 110 °C is preferably used.

During the polymerization of the aromatic vinyl-(meth) acrylic acid ester-unsaturated dicarboxylic acid anhydride copolymer (A), it is preferable to polymerize so that the composition distribution in the copolymer becomes small. Since the aromatic vinyl monomer and the unsaturated dicarboxylic acid anhydride monomer have high alternating copolymerization property, it is preferable to add the unsaturated dicarboxylic acid anhydride monomer separately so as to correspond with the polymerization speed of the aromatic vinyl monomer and the (meth)acrylic acid ester monomer. The polymerization speed can be controlled by adjusting polymerization temperature, polymerization period, and addition amount of the polymerization initiator. It is preferable to add the polymerization initiator separately, since the polymerization speed can be controlled easily. Since a copolymer excellent in transparency, heat resistance, strength and compatibility with a methacrylic resin can be obtained, it is preferable to decrease the composition distribution in the copolymer. The composition distribution in the copolymer can be evaluated by transparency. As a measure of the composition distribution in the copolymer, the total light transmittance being measured in accordance with ASTM D1003 for a sample with 2 mm thickness is preferably 88% or more, more preferably 90% or more.

By controlling the rate of addition, timing of addition and rate of polymerization of the unsaturated dicarboxylic acid anhydride monomer so that the concentration of the unsaturated dicarboxylic acid anhydride monomer in the polymerization solution is 100 ppm or less at the completion of polymerization, the amount of the residual unsaturated dicarboxylic acid anhydride monomer in the aromatic vinyl-(meth) acrylic acid ester-unsaturated dicarboxylic acid anhydride copolymer (A) can be reduced to 100 ppm or less.

In addition, in order to obtain the copolymer of the present invention having a weight average molecular weight (Mw) in the preferable range of 7 x 10⁴ to 30 x 10⁴, an addition amount of the solvent and an addition amount of the chain transfer agent shall be adjusted in addition to the adjustment of the polymerization temperature, polymerization period, and addition amount of the polymerization initiator. There is no particular limitation regarding the chain transfer agent. For example, known chain transfer agents such as n-dodecyl mercaptan, t-dodecyl mercaptan, and 2,4-diphenyl-4-methyl-1-pentene can be used.

There is no particular limitation regarding the method for collecting the copolymer of the present invention from the polymerization solution. Here, known devolatilization technique can be used. For example, a method in which the polymerization solution is continuously fed to a twin-screw devolatilizing extruder using a gear pump, followed by devolatilization treatment of the polymerization solvent, unreacted monomers, and the like, can be mentioned. Here, the devolatilization component including the polymerization solvent, unreacted monomers, and the like can be collected by condensation using a condenser and the like. Then, the condensed solution can be purified using a distilling column, and the polymerization solvent can be recycled.

A content of the ultraviolet absorbing agent (B) used in the present invention with respect to a total amount of the aromatic vinyl-(meth) acrylic acid ester-unsaturated dicarboxylic acid anhydride copolymer (A) and the ultraviolet absorbing agent (B) is 0.03 to 1.0 mass%. The content is more preferably 0.05 to 0.8%, more preferably 0.08 to 0.6%. When the content of the ultraviolet absorbing agent (B) is too little, weather resistance may be insufficient. When the content of the ultraviolet absorbing agent (B) is too much, the yellow tint of the copolymer tends to be increased, and the hue and heat resistance may be deteriorated.

The ultraviolet absorbing agent (B) is a light stabilizer which absorbs ultraviolet light which is a factor of deterioration of polymer material. Example of the ultraviolet absorbing agent (B) includes benzotriazole-based compound, cyanoacrylate-based compound, triazine-based compound, benzophenone-based compound, benzoate-based compound, salicylate-based compound, malonic acid ester-based compound, oxazanilide-based compound (oxalic acid anilide-based compound) and the like, all of which absorb ultraviolet rays and has an effect of converting into energy harmless to a polymer material such as heat.

The benzotriazole-based compound is, for example,
2-(2H-benzotriazol-2-yl)-4-6-bis(1-methyl-1-phenylethyl)phenol; 2-(2H-benzotriazol-2-yl)-p-cresol;
2-[5-chloro(2H)-benzotriazol-2-yl]-4-methyl-6-(tert-butyl)phenol;
2-(2H-benzotriazol-2-yl)-4-(1,1,3,3-tetramethylbutyl)phenol;
2,2'-methylbis[6-(2H-benzotriazol-2-yl)-4-(1,1,3,3 -tetramethylbutyl)phenol];
2-(2H-benzotriazol-2-yl)-4-methyl-6-(3,4,5,6-tetrahydrophthalimidylmethyl)phenol;
2-(3,5-di-tert-pentyl-2-hydroxyphenyl)-2H-benzotriazole;
2-(2-hydroxy-4-octyloxyphenyl)-2H-benzotriazole;
6-(2-benzotriazoyl)-4-t-octyl-6'-t-butyl-4'-methyl-2,2'-methylenebisphenol.

The cyanoacrylate-based compound is, for example, 2,2-bis{[2-cyano-3,3-diphenylacryloyl]oxy]methyl}propane-1,3-diyl=bis(2-cyano-3,3-diphenylacrylat e); Ethyl 2-cyano-3,3-diphenylacrylate; 2-ethylhexyl 2-cyano-3,3-diphenylacrylate.

The triazine-based compound is, for example, 2-(4,6-diphenyl-1,3,5-triazin-2-yl)-5-[(hexyl)oxy]-phenol; 2-(4,6-diphenyl-3,5-triazin-2-yl)-5-[2-(2-ethylhexanoyloxy] ethoxyphenol.

Benzophenone-based compound is, for example, octabenzone, 2,2'-dihydroxy-4,4'-dimethoxybenzophenone, 2,2'-4,4'-tetrahydrobenzophenone, 2,4-dihydroxybenzophenone, 2-hydroxy-benzophenone, 2-hydroxy-4-methoxybenzophenone-5-sulfonic acid trihydrate, 4-dodecyloxy-2-hydroxybenzophenone, 4-benzyloxy-2-hydroxybenzophenone, 1,4-bis(4-benzoyl-3-hydroxyphenoxy)-butane, 2,2'-dihydroxy-4-methoxybenzophenone.

Benzoate-based compound is, for example, 2,4-di-tert-butylphenyl-3,5-di-tert-butyl-4-hydroxybenzoate; hexadecyl 3,5-bis-tert-4-hydroxybenzoate.

The salicylate-based compound is, for example, phenyl salicylate; 4-tert-butylphenyl salicylate.

The malonic acid ester-based compound is, for example, malonic acid [(4-methoxyphenyl)-methylene]-dimethyl ester; tetraethyl-2,2-(1,4-phenylene-dimethyleneidene)-bismalonate.

Oxanilide-based compound (oxalic acid anilide-based compound) is, for example, 2-ethyl-2'-ethoxy-oxanilide.

The molecular weight of the ultraviolet absorbing agent (B) is preferably 300 g/mol or more, more preferably 400 g/mol. When the molecular weight of the ultraviolet absorbing agent (B) is too small, degree of decrease in heat resistance when blended in the copolymer may increase. In addition, it may volatilize during extrusion and injection molding machines and other processes.

Absorbance of the ultraviolet absorbing agent (B) at a wavelength of 380 nm in conditions of a measuring concentration of 10 mg/L is preferably 0.2 or less, more preferably 0.1 or less. When the absorbance at a wavelength of 380 nm close to the visible light region is large, the initial yellow tint may be intensified when blended in the copolymer.

The transparent and highly heat-resistant resin composition of the present invention comprises an aromatic vinyl-(meth) acrylic acid ester-unsaturated dicarboxylic acid anhydride copolymer (A) having an amount of the residual unsaturated dicarboxylic acid anhydride monomer of 100 ppm or less and an ultraviolet absorbing agent (B), wherein the content of the ultraviolet absorbing agent (B) is 0.03 to 1.0 mass%. The method for preparing the resin composition from (A) and (B) is not particularly limited. For example, as a method of adding the ultraviolet absorbing agent (B), there are a method of addition and mixing in the polymerization step, devolatilization step, granulation step of the aromatic vinyl-(meth) acrylic acid ester-unsaturated dicarboxylic acid anhydride copolymer (A) and a method of addition and mixing in an extruder or an injection molding machine or the like at the time of molding processing.

The transparent and highly heat-resistant resin composition of the present invention comprises an aromatic vinyl-(meth) acrylic acid ester-unsaturated dicarboxylic acid anhydride copolymer (A) having an amount of the residual unsaturated dicarboxylic acid anhydride monomer of 100 ppm or less and an ultraviolet absorbing agent (B), and may further comprises a methacrylic resin (C). It is possible to improve the surface hardness by mixing the methacrylic resin (C). The content of the methacrylic resin (C) with respect to a total amount of (A), (B) and (C) is preferably 30 to 85 mass%, more preferably 45 to 75 mass%. When the content of the methacrylic resin is too much, the heat resistance may be insufficient, and when the content of the methacrylic resin is too little, the surface hardness may be insufficient. In the case of the composition comprising the methacrylic resin (C), the content of the ultraviolet absorbing agent (B) with respect to a total amount of (A) and (B) is preferably 0.03 to 1.0 mass%.

The methacrylic resin (C) used in the present invention preferably comprises 70 to 100 mass% of the (meth) acrylic acid ester monomer unit and 0 to 30 mass% of the aromatic vinyl monomer unit, more preferably 0 to 25 mass%. When the content of aromatic vinyl monomer units is too much, the compatibility between the aromatic vinyl-(meth) acrylic acid ester-unsaturated dicarboxylic acid anhydride copolymer (A) and the methacrylic resin (C) may be deteriorated.

As a method of mixing the methacrylic resin (C), there is a method which the methacrylic resin (C) can be melt kneaded with the aromatic vinyl-(meth) acrylic acid ester-unsaturated dicarboxylic acid anhydride copolymer (A). There is no particular limitation on the method of melt kneading, and publicly known techniques can be used. As an apparatus used for melt kneading, for example, there are a screw extruder such as a single screw extruder, an intermeshing type co-rotating or intermeshing type different direction rotating twin screw extruder, an incomplete intermeshing type twin screw extruder, Banbury mixer, a ko-kneader and a mixing roll. It is also possible to mix the ultraviolet absorbing agent (B) at the same time during melt kneading of the aromatic vinyl-(meth) acrylic acid ester-unsaturated dicarboxylic acid anhydride copolymer (A) and the methacrylic resin (C).

In the present invention, in addition to the ultraviolet absorbing agent (B), a hindered amine light stabilizer (HALS) can be used. The hindered amine light stabilizer is a light stabilizer having a tetramethyl piperidine skeleton as a basic skeleton. It is thought that the hindered amine light stabilizer captures radicals such as polymer radicals and polyoxy radicals generated by photodegradation and stops deterioration progression due to radical chain reaction. The hindered amine light stabilizer is, for example, a polycondensate of dimethyl succinate and 4-hydroxy-2,2,6,6-tetramethyl-1-piperidine ethanol; olefin(C20-C24)-maleic anhydride·4-amino-2,2,6,6-tetramethylpiperidine copolymer; polycondensate of dibutylamine·1,3,5-triazine·N,N'-bis(2,2,6,6-tetramethyl-4-piperidyl-1,6-hexamethylenediamine and N-(2,2,6,6-tetramethyl-4-piperidyl) butylamine; poly[{6-(1,1,3,3-tetramethylbutyl)amino-1,3,5-triazine-2,4-diyl} {2,2,6,6-tetramethyl-4-piperidyl)imin o}hexamethylene {2,2,6,6-tetramethyl-4-piperidyl)imino}; bis(2,2,6,6-tetramethyl-4-piperidyl)sebacate; tetrakis (2,2,6,6-tetra-methyl-4-piperidyl)-1,2,3,4-Butane tetracarboxylate; 2,2,4,4-tetramethyl-7-oxa-3,20-diaza-spiro-[5.1.11.2]-heneicosane-21-one; 2,2,4,4-tetramethyl-21-oxo-7-oxa-3.20-diazadispiro-heneicosane-20-propanoic acid dodecyl ester / tetradecyl ester; polymer of 2,2,4,4-tetramethyl-7-oxa-3,20-diaza-20(2,3-epoxy-propyl) dispiro-[5.1.11.2]-heneicosan-one. An amount of the hindered amine light stabilizer to be added, with respect to 100 parts by mass of the aromatic vinyl-(meth) acrylic acid ester-unsaturated dicarboxylic acid anhydride copolymer (A), is preferably less than 1 part by mass.

Heat stabilizers such as hindered phenol-based compounds, lactone-based compounds, phosphorus-based compounds and sulfur-based compounds, lubricants and plasticizers, colorants, antistatic agents, additives such as mineral oil and the like can be contained in the resin composition of the present invention.

In the resin composition of the present invention, Vicat softening temperature in the condition of a load of 50 N is preferably 115 to 150, more preferably 120 to 145 °C. When Vicat softening temperature is in the range of 110 to 150 °C, a molded product having excellent heat resistance can be obtained. Vicat softening temperature is a measurement value using Method 50 (load: 50N, temperature raising speed 50 °C/hour) in accordance with JIS K7206:1999, and a test piece having a size of 10 mm × 10 mm and a thickness of 4 mm.

In the resin composition of the present invention, the melt mass flow rate (MFR) measured at 220 °C under 49 N is preferably 0.5 to 30 g/min. Melt mass flow rate (MFR) is a value measured at 220 °C under 98 N load in accordance with JIS K7210: 1999.

In the resin composition of the present invention, the total light transmittance being measured in accordance with ASTM D1003 for a sample with 2 mm thickness is preferably 88% or more, more preferably 90% or more. In addition, the haze of 2 mm thickness is preferably 1.0% or less, more preferably 0.5% or less. The b value of 2 mm thickness measured in accordance with JIS K7105 is preferably 1.5 or less, more preferably 1.0 or less.

The resin composition of the present invention can be used for applications requiring transparency, heat resistance and weather resistance. Examples of the applications include parts of household electric appliances, automobile parts, building materials, optical members, and the like. Further, because of excellent moldability, molded articles can be produced by various molding methods such as extrusion molding method and injection molding method.

### EXAMPLES

The present invention is described in further details below with Examples. The present embodiments are not limited to them.

<Manufacturing Example of Copolymer (A-1)>

A 20% maleic acid anhydride solution was prepared by dissolving maleic acid anhydride in methyl isobutyl ketone so that the maleic acid anhydride is contained by 20 mass%, and a 2% t-butyl peroxy-2-ethyl hexanoate solution was prepared by diluting t-butyl peroxy-2-ethyl hexanoate with methyl isobutyl ketone so that the t-butyl peroxy-2-ethyl hexanoate is contained by 2 mass%. These solutions were used in the polymerization.

To a 120 liter autoclave equipped with an agitator, 20% maleic acid anhydride solution (3.6 kg), styrene (24 kg), methyl methacrylate (8.8 kg), and t-dodecyl mercaptan (20 g) were added. The gas in the remaining space of the autoclave was replaced with nitrogen gas, and the temperature of the mixture was raised to 88 °C taking 40 minutes with agitation. After raising the temperature, the temperature of the mixture was kept at 88 °C, the 20% maleic acid anhydride solution was added separately at an addition speed of 2.7 kg/hour, and the 2% t-butyl peroxy-2-ethyl hexanoate solution was added separately at an addition speed of 375 g/hour. Here, each of the solutions was added continuously for 8 hours. Subsequently, the separate addition of the 2% t-butyl peroxy-2-ethyl hexanoate solution was terminated, and t-butyl peroxy isopropyl monocarbonate (40 g) was added. On the other hand, the 20% maleic acid anhydride solution was added separately keeping the addition speed of 2.7 kg/hour, and the temperature of the mixture was raised to 120 °C with a temperature raising speed of 8 °C/hour taking 4 hours. The separate addition of the 20% maleic acid anhydride solution was terminated when the accumulated amount of the separate addition reached 32.4 kg. After the temperature of the mixture was raised, the mixture was kept at 120 °C for 1 hour, and the polymerization was completed. The polymerization solution was continuously fed to a twin-screw devolatilizing extruder using a gear pump, followed by devolatilization treatment of methyl isobutyl ketone, a small amount of unreacted monomers, and the like. Subsequently, the resultant was extruded as a strand and was cut into pellets of the copolymer (A-1). The copolymer (A-1) thus obtained was subjected to composition analysis using C-13NMR method. Subsequently, molecular weight was measured using GPC.

Analysis of Composition revealed that the constituent units of the copolymer were 60 mass% of styrene monomer unit, 22 mass% of methyl methacrylate monomer unit and 18 mass% of maleic anhydride monomer unit. The amount of residual maleic anhydride monomer in the copolymer was less than the detection lower limit (<60 ppm). The weight average molecular weight was 16 x 10⁴ and the total light transmittance of the 2 mmt specular plate molded by injection molding was 91%.

### <Manufacturing Example of Copolymer (A-2)>

The 20% maleic acid anhydride solution and the 2% t-butyl peroxy-2-ethyl hexanoate solution were prepared in a similar manner as A-1.

To a 120 liter autoclave equipped with an agitator, 20% maleic acid anhydride solution (2.8 kg), styrene (25.6 kg), methyl methacrylate (8.8 kg), and t-dodecyl mercaptan (20 g) were added. The gas in the remaining space of the autoclave was replaced with nitrogen gas, and the temperature of the mixture was raised to 88 °C taking 40 minutes with agitation. After raising the temperature, the temperature of the mixture was kept at 88 °C, the 20% maleic acid anhydride solution was added separately at an addition speed of 2.1 kg/hour, and the 2% t-butyl peroxy-2-ethyl hexanoate solution was added separately at an addition speed of 500 g/hour. Here, each of the solutions was added continuously for 8 hours. Subsequently, the separate addition of the 2% t-butyl peroxy-2-ethyl hexanoate solution was terminated, and t-butyl peroxy isopropyl monocarbonate (40 g) was added. On the other hand, the 20% maleic acid anhydride solution was added separately keeping the addition speed of 2.1 kg/hour, and the temperature of the mixture was raised to 120 °C with a temperature raising speed of 8 °C/hour taking 4 hours. The separate addition of the 20% maleic acid anhydride solution was terminated when the accumulated amount of the separate addition reached 25.2 kg. After the temperature of the mixture was raised, the mixture was kept at 120 °C for 1 hour, and the polymerization was completed. The polymerization solution was continuously fed to a twin-screw devolatilizing extruder using a gear pump, followed by devolatilization treatment of methyl isobutyl ketone, a small amount of unreacted monomers, and the like. Subsequently, the resultant was extruded as a strand and was cut into pellets of the copolymer (A-2). With respect to the resulting copolymer (A-2), composition analysis is performed and molecular weight and total light transmittance were measured in the same manner as in A-1.

Analysis of Composition revealed that the constituent units of the copolymer were 64 mass% of styrene monomer unit, 22 mass% of methyl methacrylate monomer unit and 14 mass% of maleic anhydride monomer unit. The amount of residual maleic anhydride monomer in the copolymer was less than the detection lower limit (<60 ppm). The weight average molecular weight was 17 x 10⁴ and the total light transmittance of the 2 mmt specular plate molded by injection molding was 91%.

### <Manufacturing Example of Copolymer (A-3)>

A 25% maleic acid anhydride solution was prepared by dissolving maleic acid anhydride in methyl isobutyl ketone so that the maleic acid anhydride is contained by 25 mass%, and a 2% t-butyl peroxy-2-ethyl hexanoate solution was prepared same as (A-1). These solutions were used in the polymerization.

To a 120 liter autoclave equipped with an agitator, 25% maleic acid anhydride solution (3.52 kg), styrene (24 kg), methyl methacrylate (7.2 kg), and t-dodecyl mercaptan (20 g) were added. The gas in the remaining space of the autoclave was replaced with nitrogen gas, and the temperature of the mixture was raised to 92 °C taking 40 minutes with agitation. After raising the temperature, the temperature of the mixture was kept at 92 °C, the 25% maleic acid anhydride solution (31.71 kg in a total amount) was added separately while changing an addition rate in stages (at the addition speed of 3.96 kg/hour until 4 hour from the start, 3.17 kg/hour from 4 to 7 hour, 1.58 kg/hour from 7 to 10 hour, 0.54 kg/hour from 10 to 13 hour). The 2% t-butyl peroxy-2-ethyl hexanoate solution (4.02 kg in a total amount) was added separately while changing an addition rate in stages (at the addition speed of 0.24 g/hour until 7 hour from the start, 0.39 kg/hour from 7 to 13 hour). The polymerization temperature was maintained at 92 °C until 7 hour from the start of the addition, then the temperature was raised to 116 °C over 6 hours at a rate of temperature increase of 4 °C /hour, further maintained at 116 °C for 1 hour, and the polymerization was completed. The polymerization solution was continuously fed to a twin-screw devolatilizing extruder using a gear pump, followed by devolatilization treatment of methyl isobutyl ketone, a small amount of unreacted monomers, and the like. Subsequently, the resultant was extruded as a strand and was cut into pellets of the copolymer (A-3). With respect to the resulting copolymer (A-3), composition analysis is performed and molecular weight and total light transmittance were measured in the same manner as in A-1.

Analysis of Composition revealed that the constituent units of the copolymer were 60 mass% of styrene monomer unit, 18 mass% of methyl methacrylate monomer unit and 22 mass% of maleic anhydride monomer unit. The amount of residual maleic anhydride monomer in the copolymer was less than the detection lower limit (<60 ppm). The weight average molecular weight was 16 x 10⁴ and the total light transmittance of the 2 mmt specular plate molded by injection molding was 90%.

### <Manufacturing Example of Copolymer (A-4)>

The 20% maleic acid anhydride solution and the 2% t-butyl peroxy-2-ethyl hexanoate solution were prepared in a similar manner as A-1.

To a 120 liter autoclave equipped with an agitator, 20% maleic acid anhydride solution (3.6 kg), styrene (24 kg), methyl methacrylate (8.8 kg), and t-dodecyl mercaptan (20 g) were added. The gas in the remaining space of the autoclave was replaced with nitrogen gas, and the temperature of the mixture was raised to 88 °C taking 40 minutes with agitation. After raising the temperature, the temperature of the mixture was kept at 88 °C, the 20% maleic acid anhydride solution was added separately at an addition speed of 2.65 kg/hour, and the 2% t-butyl peroxy-2-ethyl hexanoate solution was added separately at an addition speed of 375 g/hour. Here, each of the solutions was added continuously for 8 hours. Subsequently, the separate addition of the 2% t-butyl peroxy-2-ethyl hexanoate solution was terminated, and t-butyl peroxy isopropyl monocarbonate (40 g) was added. On the other hand, the 20% maleic acid anhydride solution was added separately keeping the addition speed of 2.65 kg/hour, and the temperature of the mixture was raised to 120 °C with a temperature raising speed of 8 °C/hour taking 4 hours. The separate addition of the 20% maleic acid anhydride solution was terminated when the accumulated amount of the separate addition reached 32.4 kg. After the temperature of the mixture was raised, the mixture was kept at 120 °C for 1 hour, and the polymerization was completed. The polymerization solution was continuously fed to a twin-screw devolatilizing extruder using a gear pump, followed by devolatilization treatment of methyl isobutyl ketone, a small amount of unreacted monomers, and the like. Subsequently, the resultant was extruded as a strand and was cut into pellets of the copolymer (A-4). With respect to the resulting copolymer (A-4), composition analysis is performed and molecular weight and total light transmittance were measured in the same manner as in A-1.

Analysis of Composition revealed that the constituent units of the copolymer were 60 mass% of styrene monomer unit, 22 mass% of methyl methacrylate monomer unit and 18 mass% of maleic anhydride monomer unit. The amount of residual maleic anhydride monomer in the copolymer was 80 ppm. The weight average molecular weight was 16 x 10⁴ and the total light transmittance of the 2 mmt specular plate molded by injection molding was 91%.

### <Manufacturing Example of Copolymer (A-5)>

The 20% maleic acid anhydride solution and the 2% t-butyl peroxy-2-ethyl hexanoate solution were prepared in a similar manner as A-1.

To a 120 liter autoclave equipped with an agitator, 20% maleic acid anhydride solution (3.6 kg), styrene (24 kg), methyl methacrylate (8.8 kg), and t-dodecyl mercaptan (20 g) were added. The gas in the remaining space of the autoclave was replaced with nitrogen gas, and the temperature of the mixture was raised to 88 °C taking 40 minutes with agitation. After raising the temperature, the temperature of the mixture was kept at 88 °C, the 20% maleic acid anhydride solution was added separately at an addition speed of 2.6 kg/hour, and the 2% t-butyl peroxy-2-ethyl hexanoate solution was added separately at an addition speed of 375 g/hour. Here, each of the solutions was added continuously for 8 hours. Subsequently, the separate addition of the 2% t-butyl peroxy-2-ethyl hexanoate solution was terminated, and t-butyl peroxy isopropyl monocarbonate (40 g) was added. On the other hand, the 20% maleic acid anhydride solution was added separately keeping the addition speed of 2.65 kg/hour, and the temperature of the mixture was raised to 120 °C with a temperature raising speed of 8 °C/hour taking 4 hours. The separate addition of the 20% maleic acid anhydride solution was terminated when the accumulated amount of the separate addition reached 32.4 kg. After the temperature of the mixture was raised, the mixture was kept at 120 °C for 1 hour, and the polymerization was completed. The polymerization solution was continuously fed to a twin-screw devolatilizing extruder using a gear pump, followed by devolatilization treatment of methyl isobutyl ketone, a small amount of unreacted monomers, and the like. Subsequently, the resultant was extruded as a strand and was cut into pellets of the copolymer (A-5). With respect to the resulting copolymer (A-5), composition analysis is performed and molecular weight and total light transmittance were measured in the same manner as in A-1.

Analysis of Composition revealed that the constituent units of the copolymer were 60 mass% of styrene monomer unit, 22 mass% of methyl methacrylate monomer unit and 18 mass% of maleic anhydride monomer unit. The amount of residual maleic anhydride monomer in the copolymer was 230 ppm. The weight average molecular weight was 16 x 10⁴ and the total light transmittance of the 2 mmt specular plate molded by injection molding was 91%.

### <Manufacturing Example of Copolymer (A-6)>

The 20% maleic acid anhydride solution and the 2% t-butyl peroxy-2-ethyl hexanoate solution were prepared in a similar manner as A-1.

To a 120 liter autoclave equipped with an agitator, 20% maleic acid anhydride solution (3.4 kg), styrene (24 kg), methyl methacrylate (9.2 kg), and t-dodecyl mercaptan (60 g) were added. The gas in the remaining space of the autoclave was replaced with nitrogen gas, and the temperature of the mixture was raised to 88 °C taking 40 minutes with agitation. After raising the temperature, the temperature of the mixture was kept at 88 °C, the 20% maleic acid anhydride solution was added separately at an addition speed of 2.55 kg/hour, and the 2% t-butyl peroxy-2-ethyl hexanoate solution was added separately at an addition speed of 375 g/hour. Here, each of the solutions was added continuously for 8 hours. Subsequently, the separate addition of the 2% t-butyl peroxy-2-ethyl hexanoate solution was terminated, and t-butyl peroxy isopropyl monocarbonate (40 g) was added. On the other hand, the 20% maleic acid anhydride solution was added separately keeping the addition speed of 2.55 kg/hour, and the temperature of the mixture was raised to 120 °C with a temperature raising speed of 8 °C/hour taking 4 hours. The separate addition of the 20% maleic acid anhydride solution was terminated when the accumulated amount of the separate addition reached 30.6 kg. After the temperature of the mixture was raised, the mixture was kept at 120°C for 1 hour, and the polymerization was completed. The polymerization solution was continuously fed to a twin-screw devolatilizing extruder using a gear pump, followed by devolatilization treatment of methyl isobutyl ketone, a small amount of unreacted monomers, and the like. Subsequently, the resultant was extruded as a strand and was cut into pellets of the copolymer (A-6). With respect to the resulting copolymer (A-6), composition analysis is performed and molecular weight and total light transmittance were measured in the same manner as in A-1.

Analysis of Composition revealed that the constituent units of the copolymer were 60 mass% of styrene monomer unit, 23 mass% of methyl methacrylate monomer unit and 17 mass% of maleic anhydride monomer unit. The amount of residual maleic anhydride monomer in the copolymer was 240 ppm. The weight average molecular weight was 13 x 10⁴ and the total light transmittance of the 2 mmt specular plate molded by injection molding was 91%.

### <Examples and Comparative Examples>

The aromatic vinyl-(meth) acrylic acid ester-unsaturated dicarboxylic acid anhydride copolymers (A-1) to (A-6) described in Manufacturing Examples, the ultraviolet absorbing agents (B-1) to (B-5) and the methacrylic resins (C-1) were mixed in Henschel mixer and melt kneaded at a cylinder temperature of 230 °C by a twin-screw extruder (TEM-35B, available from TOSHIBA MACHINE CO., LTD.) and a pelletized resin composition was obtained. A test piece was prepared from the pellets of the obtained resin composition, and was subjected to the following evaluations. The evaluation results are shown in Tables 1 to 3. The ultraviolet absorbing agent and methacrylic resin used are as follows.
(B-1) 2-(2H-benzotriazol-2-yl)-4-6-bis(1-methyl-1-phenylethyl) phenol (Tinuvin 234, available from BASF Japan Ltd.)
(B-2) 2-(2H-Benzotriazol-2-yl)-p-cresol (Tinuvin P manufactured by BASF Japan Ltd.)
(B-3) 2,4-Di-tert-butylphenyl-3,5-di-tert-butyl-4-hydroxybenzoate (Tinuvin 120, available from BASF Japan Ltd.)
(B-4) 2-ethyl, 2'-ethoxy-oxanilide (Sanduvor VSU made by Clariant Japan KK)
(B-5) Tetraethyl-2,2-(1,4-phenylene-dimethyleneidene)-bismalonate (Hostavin B-Cap, available from Clariant Japan KK)
(C-1) PMMA resin (ACRYPET VH 5, available from Mitsubishi Rayon Co., Ltd.)

The test piece was prepared from pellets of the obtained resin composition, and was subjected to the following evaluations. The evaluation results are shown in Tables 1 to 3. In Example 10, as a hindered amine light stabilizer (HALS), a polycondensate of dimethyl succinate and 4-hydroxy-2,2,6,6-tetramethyl-1-piperidine ethanol (Tinuvin 622, available from BASF Japan Ltd.) was used.

### (Vicat Softening Temperature)

The Vicat softening temperature was measured in accordance with JIS K7206:1999. Here, Method 50 (load: 50N, temperature raising speed 50°C/hour) was used, and the test piece having the size of 10 mm x 10 mm and 4 mm thickness was used. HDT & VSP testing apparatus (available from Toyo Seiki Seisaku-sho, Ltd.) was used as the measuring apparatus.

### (Total Light Transmittance, Haze, Hue)

The total light transmittance and the haze were measured as follows. First, a mirror plate having a length of 90 mm, a width of 55 mm, and a thickness of 2 mm was prepared using an injection molding machine (IS-50EPN, available from TOSHIBA MACHINE CO., LTD.), with the molding conditions of a cylinder temperature of 240 °C and a mold temperature of 70 °C. Then, the mirror plate was subjected to the measurement in compliance with ASTM D1003, using a haze meter (NDH-1001DP, available from NIPPON DENSHOKU INDUSTRIES CO., LTD.). In addition, b value was measured using an ultraviolet visible spectrophotometer (V-670, available from JASCO Corporation) in accordance with JIS K7105.

### (Weather Resistance)

The weather resistance was evaluated by a light irradiation (without rain) using XENON Weather-Ometer (Ci65A, available from Atlas Material Testing Technology LLC). A mirror plate having a length of 90 mm, a width of 55 mm and a thickness of 2 mm was subjected to the test of the weather resistance as a test piece under conditions of a black panel temperature of 89 °C, an irradiance of 60 W/m² at a wavelength of 300 to 400 nm, an irradiation time of 463 hours, and a radiation exposure amount of 100 MJ/m². The b value of the test piece after irradiation was measured, and the difference between the b value after irradiation and the b value before irradiation was defined as Δb.

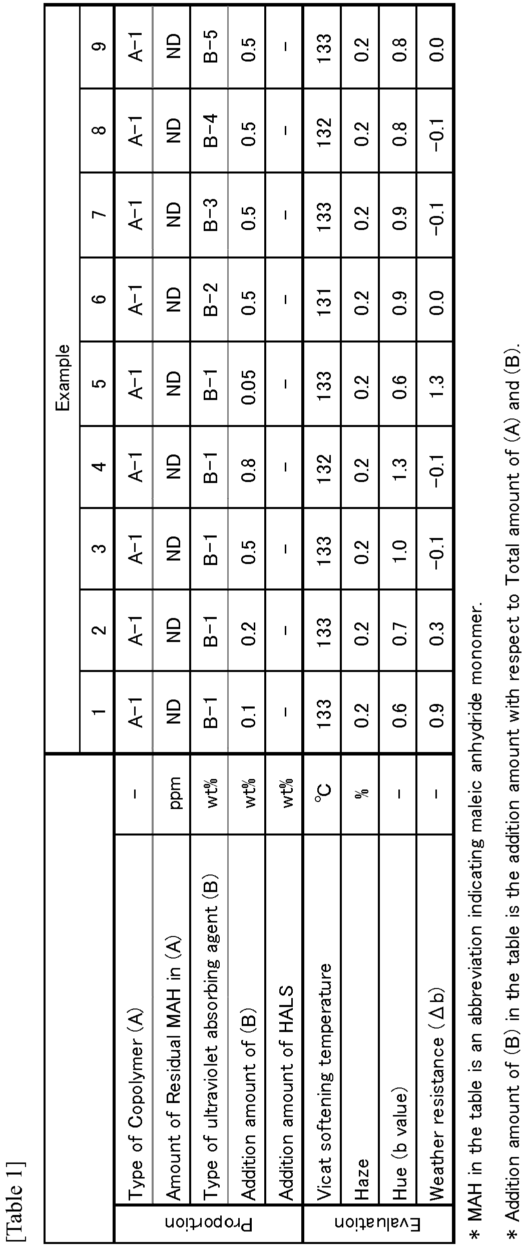

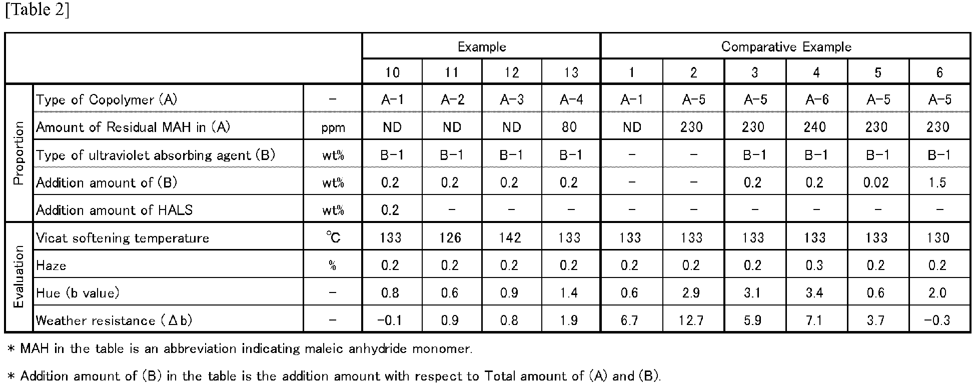

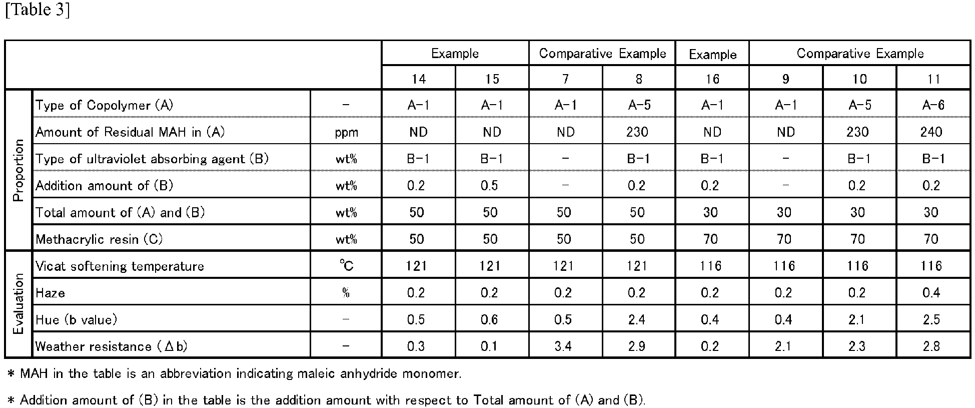

The examples had a high heat resistance, good transparency and hue, and excellent weather resistance. On the other hand, in the comparative examples, either one of hue and weather resistance was inferior.

### Industrial Applicability

The resin composition of the present invention is suitable for applications requiring heat resistance, transparency, hue and weather resistance, and is useful for parts of household electric appliances, automobile parts, building materials, and optical members.

## Claims

1. A transparent and highly heat-resistant resin composition, comprising:
an aromatic vinyl-(meth) acrylic acid ester-unsaturated dicarboxylic acid anhydride copolymer (A); and
an ultraviolet absorbing agent (B);
wherein an amount of a residual unsaturated dicarboxylic acid anhydride monomer contained in the copolymer (A) is 100 ppm or less, and
a content of the ultraviolet absorbing agent (B) with respect to a total amount of (A) and (B) is 0.03 to 1.0 mass%.

2. The composition of Claim 1, further comprising a methacrylic resin (C).

3. The composition of Claim 2, wherein a content of the methacrylic resin (C) with respect to a total amount of (A), (B) and (C) is 30 to 85 mass%.

4. The composition any one of Claims 1 to 3, wherein the copolymer (A) comprises:
45 to 85 mass% of a monomer unit of the aromatic vinyl;
5 to 45 mass% of a monomer unit of the (meth) acrylic acid ester;
10 to 30 mass% of a monomer unit of the unsaturated dicarboxylic anhydride;
wherein a weight average molecular weight (Mw) of the copolymer (A) is 10 x 10⁴ to 30 x 10⁴.

5. The composition any one of Claims 1 to 4, wherein Vicat softening temperature in the condition of a load of 50 N is 115 to 150 °C.

6. A molded article comprising the composition of any one of Claims 1 to 5.
